Europäisches Patentamt

(19) European Patent Office

Office européen des brevets

(11) Publication number: **0 119 152**
**A2**

(12) # EUROPEAN PATENT APPLICATION

(21) Application number: **84630044.0**

(22) Date of filing: **06.03.84**

(51) Int. Cl.³: **B 60 C 3/00**
    **B 60 C 1/00**

(30) Priority: **15.03.83 US 475585**

(43) Date of publication of application:
**19.09.84 Bulletin 84/38**

(84) Designated Contracting States:
**DE FR GB IT LU**

(71) Applicant: **THE GOODYEAR TIRE & RUBBER COMPANY**
**1144 East Market Street**
**Akron, Ohio 44316(US)**

(72) Inventor: **Chrobak, Dennis Steven**
**2995 Vincent Road**
**Silver Lake Ohio 44224(US)**

(74) Representative: **Weyland, Joseph Jean Pierre**
**Goodyear International Tire Technical Center Patent**
**Department Avenue Gordon Smith**
**L-7750 Colmar-Berg(LU)**

(54) **Fuel efficient tire.**

(57) A tire (1) is provided with dimensional and physical characteristics to provide improved rolling resistance and thereby improve fuel economy. The aspect ratio, tread width (TW), tread thickness (TT) and tread shoulder gauge (SG) are within certain specific ranges, while various components of the tire have certain modulus and resilience properties.

EP 0 119 152 A2

Croydon Printing Company Ltd.

-1-

## FUEL EFFICIENT TIRE

This invention relates to a radial tire with improved fuel economy. With the high cost of fuel for vehicles, for example those containing internal combustion engines, including passenger cars and trucks, it is important that various means be taken to improve fuel economy.

It would be extremely desirable to have radial passenger and truck tires which have reduced rolling resistance and as a result improved fuel economy. It would be even more desirable that such a tire would provide improved fuel economy without substantial sacrifices in the performance and durability characteristics of the tire.

It is an object of this invention to provide a pneumatic radial tire which will provide improved fuel economy and reduced rolling resistance. It is a further object of the present invention to provide a fuel efficient tire without substantial sacrifices in tire performance and/or durability. Other objects will become apparent as this description proceeds.

In accordance with one aspect of this invention, there is provided a fuel efficient tire having the following characteristics:

a. an aspect ratio of from 85% to 120%, preferably 85% to 100%,

b. a tread width of from 70% to 115%, preferably 70% to 85%, of the bead width,

c. a tread thickness of from 3% to 5% of the section height,

d. a tread shoulder gauge of from 4% to 7% of the section height, and

e. a tread with a hot resilience from 70% to 80%, a cold resilience from 60% to 70%.

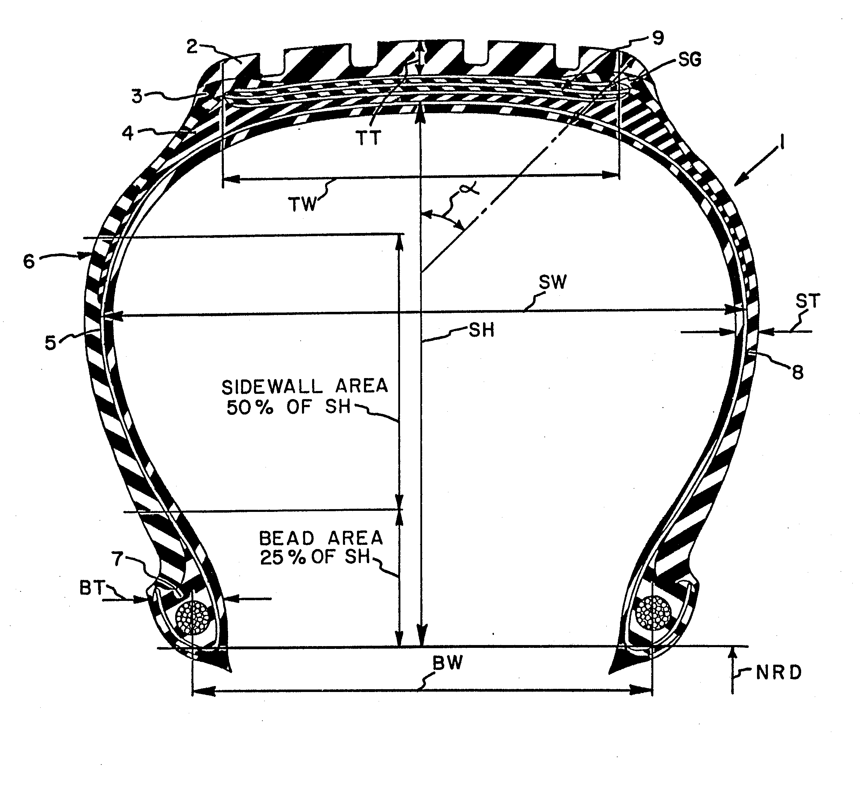

The figure is a cross sectional view of a tire constructed according to the practice of the present invention.

In the figure, there is illustrated the tire 1, the tread 2, the base 3, the shoulder wedge 4, the carcass 5, the sidewall 6, the bead area 7, the outer sidewall 8 and the belt package 9. While the shoulder wedge 4 and the base 3 are preferable, they are not necessary parts of the construction.

In preferred embodiments the tire possesses a tread base 3 and/or shoulder wedges 4.

In other preferred embodiments, the tread base 3, when present, and/or outer sidewall 8 and/or wedges 4, when present, have a hot resilience from 85% to 95% and a cold resilience from 77% to 87%.

The hot resilience of the carcass stock is preferably 55% to 70%, while the cold resilience of the carcass stock is preferably 65% to 80%.

The dynamic modulus of the tread is preferably 50 to 180 $Kg/cm^2$, and most preferably 50 to 80 $Kg/cm^2$.

The dynamic modulus of the base, outer sidewall and wedges are preferably 35 to 60 $Kg/cm^2$.

The dynamic modulus of the carcass stock is preferably 60 to 300 $Kg/cm^2$.

Also in a preferred embodiment, the width of the bead area, i.e., the bead thickness BT is 50% to 100% of the tread thickness, preferably 50% to 75%.

Also preferred is a tire of the present invention with a total sidewall thickness ST which is reasonably uniform from one end of the sidewall area to the other. Preferably the thickness at any point in the sidewall area does not vary by more than 20% from any of the other points in the sidewall area. The total sidewall thickness includes the outer sidewall, the carcass plies and any component inside the carcass plies including the inner liner, if an inner liner is used.

As used herein, the bead area 7 is the area of the tire encompassed by the lower 25% of the section height. The sidewall area is the area of the tire encompassed by the middle 50% of the section height.

The aspect ratio is the ratio of the section height SH, which is the perpendicular distance from the nominal rim diameter base line, NRD, to the top of the carcass at a point immediately below the center of the crown of the tire, to the section width SW, which is the maximum width of the tire as measured from the carcass in one sidewall to the carcass in the other sidewall. The tread width TW is the width of the footprint of the tire when inflated and under normal load. The bead width BW is the axial distance between the center of the bead bundles in the two bead areas of the tire. The tread thickness TT is the distance from the outer surface of the tread at the tread centerline perpendicularly to the top carcass ply. The tread shoulder gauge (SG) is the distance from the tread edge, as determined from the footprint, to the point where a line passing through the tread edge point to the inner surface of the tire at an angle of 90° to the inner surface of the tire, intersects the inner surface of the tire.

All of the tire dimensions referred to herein are dimensions taken on an inflated tire under no load, with the exception of the tread width which is the width of the tread footprint when the tire is inflated and under normal load.

Other than the particular structural dimensions and physical properties recited earlier herein for the tire of the present invention, all other features of the tire can be conventional in nature. For example, whether the tire possesses cut or folded belts, one carcass ply or a multi-ply carcass, or any other conventional construction features, it will benefit by the practice of the present invention.

Also, regardless of the fabric or wire used in the tire, whether steel, polyaramid, nylon, etc., the tire will benefit by the practice of the present invention.

In addition, any conventional compound can be used in the various components of the tire so long as the resilience and modulus properties recited earlier herein are present.

The following formulations can be used in the below designated components of the tire to provide a dynamic modulus and resilience within the broadest ranges recited earlier herein. These formulations do not limit but merely illustrate formulations which can be used.

A = tread stock

B = base, outer sidewall, carcass and shoulder wedge

|  | FORMULATIONS | |
| --- | --- | --- |
|  | A | B |
| Butadiene/Styrene Rubber (SBR) | 90.00 | --- |
| Cis, 1,4 Polybutadiene | 10.00 | 60.00 |
| Natural Rubber | --- | 40.00 |
| ISAF Black | 45.00 | --- |
| FEF Black | --- | 35.00 |
| Processing Oil | 21.00 | 30.00 |
| ZnO | 2.00 | 2.50 |
| Sulfur | 1.75 | 2.00 |
| 2-Morpholinodithiobenzothiazole | 1.00 | 1.50 |
|  | 170.75 | 171.00 |

Hot resilience and cold resilience as recited herein can be measured by ASTM Method D-1054. The hot resilience is measured at 100°C. and the cold resilience is measured at room temperature.

Dynamic modulus as recited herein is measured at a frequency of 60 hertz and a temperature of 212°F.

Tires conforming to the practice of the present invention not only possess improved rolling resistance and fuel economy, but in addition provide reasonable tire performance and durability. In fact, a vehicle having four experimental tires conforming to the practice of the present invention won the 1981 Future Fuels Challenge Rally.

While all types of tires including passenger and truck tires will benefit by the practice of the present invention, the benefits are particularly beneficial to truck tires, whether medium or heavy. For purposes of this invention, light truck tires are those with Tire and Rim Association (1982) inflation/load ratios (psi/pounds) of 30/1000 to 105/3417 (211/454 to 738/1551 $Kg/mm^2/Kg$) and medium and heavy truck tires are those with an inflation/load rating of from 65/2460 to 120/9230 (457 x $10^{-4}$/1117 to 844 x $10^{-4}$/4190 $Kg/mm^2/Kg$) for conventional constructions and 30/3600 to 105/10970 (211 x $10^{-4}$/1634 to 738 x $10^{-4}$/4980 $Kg/mm^2/Kg$) for wide base constructions, the medium truck sizes including 7.50 through 11.50-20 and the heavy truck sizes including 12.00-20 and larger sizes.

The method by which the tire is manufactured is not important to the practice of the invention.

While certain representative embodiments and details have been shown for the purpose of illustrating the invention, it will be apparent to those skilled in this art that various changes and modifications may be made therein.

For example, while the base has been shown to be positioned under only a portion of the cap, it may proceed across the entire crown beneath the entire cap. In either case it provides minimized internal heat build-up.

The wedges are conventionally positioned underneath the edges of the belt package and provide shear modulus transition between a high modulus belt ending and a low modulus carcass ply line.

I claim:

1. A radial pneumatic tire characterized by
   a. an aspect ratio of from 85% to 120%,
   b. a tread width from 70% to 115% of the bead width of the tire,
   c. a tread thickness from 3% to 5% of the section height,
   d. a tread shoulder gauge from 4% to 7% of section height, and
   e. a tread with a hot resilience from 70% to 80% and a cold resilience from 60% to 70%.

2. The pneumatic tire of claim 1 characterized in that the aspect ratio is 85% to 100%.

3. The pneumatic tire of claim 2 characterized in that the tread width is 70% to 85% of the bead width.

4. The pneumatic tire of claim 1 characterized in that the dynamic modulus of the tread is from 50 to 180 $Kg/cm^2$.

5. The pneumatic tire of claim 1 characterized in that the tire has shoulder wedges.

6. The pneumatic tire of claim 5 characterized in that the tire has a tread base.

7. The pneumatic tire of claim 6 characterized in that the shoulder wedge, tread base and outer sidewall have a dynamic modulus of 35 $Kg/cm^2$ to 60 $Kg/cm^2$.

8. The pneumatic tire of claim 6 characterized in that the shoulder wedge, tread base and outer sidewall have a hot resilience from 85% to 95% and a cold resilience from 77% to 87%.

9. The pneumatic tire of claim 8 characterized in that the total sidewall thickness is uniform, not varying at any point in the sidewall area by more than 20% from any other point in the sidewall area.

10. The pneumatic tire of claim 9 characterized in that the aspect ratio is 85% to 100%, the tread width is 70% to 85% of the bead width, the dynamic modulus of the tread is 50 to 180 $Kg/cm^2$ and the dynamic modulus of the base, outer sidewall and wedges is 35 to 60 $Kg/cm^2$.

ST 8 NRD SG 9 SW SH BW α TT TW SIDEWALL AREA 50 % OF SH BEAD AREA 25 % OF SH 2 3 4 5 6 7 BT